Europäisches Patentamt

European Patent Office

Office européen des brevets

(11) Publication number: **0 101 948**
**B1**

## (12) EUROPEAN PATENT SPECIFICATION

(45) Date of publication of patent specification: **28.09.88**

(21) Application number: **83107451.3**

(22) Date of filing: **28.07.83**

(51) Int. Cl.⁴: **B 22 D 19/14,** C 22 C 1/09,
B 22 D 27/11

(54) **Method of manufacturing a surface composite reinforced member.**

(30) Priority: **30.07.82 JP 134229/82**

(43) Date of publication of application:
**07.03.84 Bulletin 84/10**

(45) Publication of the grant of the patent:
**28.09.88 Bulletin 88/39**

(84) Designated Contracting States:
**DE FR GB**

(56) References cited:
DE-A-2 644 272
US-A-3 364 975

"Hüttentechnik" 1972, p.73

(73) Proprietor: **TOYOTA JIDOSHA KABUSHIKI
KAISHA**
**1, Toyota-cho Toyota-shi
Aichi-ken 471 (JP)**

(72) Inventor: **Donomoto, Tadashi**
**TOYOTA JIDOSHA KABUSHIKI KAISHA 1,
Toyota-cho
Toyota-shi Aichi-ken (JP)**
Inventor: **Tanaka, Atsuo**
**TOYOTA JIDOSHA KABUSHIKI KAISHA 1,
Toyota-cho
Toyota-shi Aichi-ken (JP)**
Inventor: **Tatematsu, Yoshiaki**
**TOYOTA JIDOSHA KABUSHIKI KAISHA 1,
Toyota-cho
Toyota-shi Aichi-ken (JP)**

(74) Representative: **Bühling, Gerhard, Dipl.-Chem.
et al
Patentanwaltsbüro Tiedtke-Bühling-Kinne
Grupe-Pellmann-Grams-Struif Bavariaring 4
D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a method of manufacturing a surface composite reinforced member according to the pre-characterising portion of the claim.

Various types of composite materials are known in which small pieces, such as fibers, whiskers, or particles, of reinforcing material such as for example silicon carbide or silicon nitride are dispersed within a matrix of matrix metal such as for example aluminium alloy. These materials have great advantages over the original alloy or matrix metal with regard to certain characteristics such as strength and wear resistance, and more specifically with regard to tensile and bending strength, heat resistance, and wear and scuffing resistance; and accordingly many researches have been recently conducted with regard to the practicability of fabricating various automobile and aircraft parts from such composite materials. However, with regard to certain other characteristics such as wear on a cooperating member and cost and ease of machining and post finishing, the original alloy or matrix metal has advantages over the composite reinforced material, and accordingly in the case of some applications the desirability has been recognized of reinforcing only selected portions of metallic members with reinforcing material, the remaining portions being left as composed substantially of matrix metal without any composite reinforcement. For example, in the case of an engine piston, it is recognized that it is desirable to reinforce by the addition of fibers or the like the crown and side and skirt portions of the piston, which are the parts thereof which are most subject to high temperatures and pressures and thermal abrasion and also are most subject to wear by rubbing ugainst mating surfaces, while on the other hand it is recognized that it is desirable to fabricate the remainder of the piston out of non reinforced metal only. In many cases, the parts of a member which are thus to be composite reinforced are surface parts thereof.

Now, with regard to methods for fabricating a member with parts thereof reinforced by composite reinforcing material, there are various conventionally known methods such as diffusion joining, permeation, sintering, and high pressure casting. Of these methods, the high pressure casting method is the most sophisticated. In this method, as conventionally practiced, first a mass of the reinforcing material is shaped into a formed shape or block of the general configuration of the part of the member to be fabricated which is required to be reinforced by composite reinforcing material, and this formed shape of reinforcing material is placed within the mold cavity of a casting mold and is maintained by some means in an appropriate position therein. Then molten matrix metal is poured into said mold cavity so as to fill it, and is then pressurized to a high pressure by a mold plunger or the like within said mold cavity and is allowed to solidify therein while under said pressure, so that this applied pressure causes the molten matrix metal to penetrate into the interstices between the fibers or the particles of the reinforcing material formed shape, thus forming the portions of the finished member which correspond to the portions of the mold cavity which were occupied by the reinforcing material formed shape as composite reinforced portions, while leaving the remainder portions of the finished member which correspond to portions of the mold cavity which were not occupied by the reinforcing material formed shape as made only of matrix metal without any composite reinforcement.

This high pressure casting method has the advantages that, even if the reinforcing material has poor wettability with regard to the matrix metal, very good bonding can be obtained between the reinforcing material and the matrix metal, and further that since no vacuum is employed no complicated and expensive equipment for creating a vacuum is required. However, the problem exists that it is necessary to form the reinforcing material into a formed shape before the casting process as explained above, and also that it is necessary to maintain this formed shape in a predetermined position in the mold cavity during the casting process, which can be very difficult. Especially in the particular case that it is desired to form certain portions of and proximate to the surface of the finished member as composite reinforced, which as explained above is often the case, the manufacture of such a formed shape of composite reinforcing material which in this case is required to be large and yet thin, and also the maintenance of this thin and extensive formed shape in place during the casting process, becomes very difficult. Especially, since in many cases as explained above the surface portions of the member to be fabricated are required to be composite reinforced in order to confer upon them improved heat and/or wearing resistance, in such a case, if a part of the presumably large yet rather delicate composite material formed shape should become distorted during the casting process so as to be moved even by a relatively small amount inwards from the side wall surface of the mold cavity, then this surface portion of the resulting member will lack composite reinforcement, and will accordingly be deficient with regard to heat and/or friction resistance, thus vitiating the object of composite reinforcement to a large extent. The thinner are the portions of the member to be fabricated that are required to be surface reinforced by composite material, the more aggravated does these problems of fabricating and emplacing the composite material formed shape in the casting mold become, and in the most severe cases it becomes extremely diffiuclt to practice the high pressure casting method as conventionally performed as described above, in order to manufacture such a surface composite reinforced member.

US—A—3 364 975 discloses a process of casting a molten metal in a mold to obtain a casting having a wear-resistant external surface, said process comprising in combination the steps of applying to the surface of the mold a slip of silicon carbide whiskers suspended in a liquid material, preferably water, and pouring the molten metal into the mold, whereby said whiskers concentrate on the surface of the casting forming a wear-resistant external layer. In order to provide a stable suspension of the whiskers, the slip is usually prepared with the addition thereto of a suspending agent such as carboxymethylcellulose. If desired, a clay-like material such as bentonite may also be included in the slip.

DE—A—26 44 272 discloses a method of manufacturing fiber-reinforced articles wherein a preform of reinforcing inorganic fibers is treated with molten metal by a high pressure casting process. Thereby molten matrix metal is pressed into interstices between the reinforcing fibers. According to this known method a surface composite reinforced member cannot be obtained.

It is the object of the present invention to provide a method of manufacturing a surface composite reinforced member according to the pre-characterizing portion of the claim, which method utilizes the high pressure casting method, which can be easily and efficiently utilized, even when the portions of the member which are to be composite reinforced are quite thin and extensive surface portions, without risking that such a formed shape of reinforcing material as described above should become displaced from its proper position proximate to the surface of the mold cavity of the mold during casting, and that thus in fact some of the surface portions of the finished member which ought to be composite reinforced should not be, said method avoiding the prior art requirements for forming the reinforcing material into a formed shape before casting and for maintaining said formed shape of reinforcing material in a predetermined position in the mold cavity during casting, the reinforcing whiskers being positively and easily kept in their appropriate place during casting without any difficult pre-casting procedure.

This object is achieved by the features of the characterizing portion of the claim.

According to the method of the invention, the reinforcing whiskers are made into a liquid like mixture by being mixed with the solvent (which may be water or alcohol or a mixture thereof). The binder is added to said mixture, and then a thin layer of the mixture is stuck or plastered on to the inner surface of the mold cavity in the casting mold, against the portions thereof which are so positioned as to form the parts of the surface of the cast member which are intended to be composite reinforced by said reinforcing whiskers intermingled with matrix metal. Then, after drying the layer, a mass of molten matrix metal is poured into the casting mold and is allowed to solidify under pressure. This pressurized molten matrix metal percolates into the interstices of the reinforcing whiskers in the dried layer and forms together with said reinforcing whiskers a composite reinforced material, the body of said composite reinforced material thus being located in just the part or parts of the cast member where it is required. This is accomplished without any need for forming the reinforcing whiskers into a preformed shape before casting, and is practicable, even when and though the portions of the member which are to be composite reinforced are quite thin and extensive surface portions. Further, no risk is run of the reinforcing whiskers which are to form the composite reinforcement of the reinforced parts of the finished member in combination with matrix metal becoming displaced from their desired position proximate to the surface of the mold cavity of the mold during casting, and that thus in fact some of the surface portions of the finished member which ought to be composite reinforced should not be. Further, the prior art requirement for maintaining the formed shape of reinforcing material in a predetermined position in the mold cavity of the mold during casting is avoided, because the reinforcing whiskers are merely attached to the side surfaces of the casting mold, thus allowing the reinforcing whiskers to be positively and easily kept in their appropriate place during the casting process, without any difficult pre casting procedure. Further, any difficult pre casting forming requirement for the reinforcing whiskers is avoided. This means, as a whole, that the process of manufacture of the surface composite reinforced member can be accomplished cheaply and efficiently, without the use of any vacuum equipment of the like; and because the high pressure casting method is used it is possible to thus form a surface composite reinforced member of arbitrary shape while providing very good bonding characteristics between the matrix material and the reinforcing whiskers.

In step (c) when the layer of reinforcing whiskers is dried, the binder, which is solidified by this drying, helps with the adhesiion of said reinforcing whisker layer.

In particular embodiments of the invention to obtain particularly good results, one or more of the materials used are: for the reinforcing whiskers, silicon carbide whiskers, silicon nitride whiskers, or whiskers of potassium titanate, and for the matrix metal, aluminium alloy.

Further, according to other particular embodiments of the method of the invention, said application of said mixture of said reinforcing whiskers, said solvent and said binder to the inner surface of said mold cavity of said casting mold in step (b) is performed by using a brush or alternatively by spraying.

According to such methods, either of which may be advantageously employed depending upon the type of solvent used, the type of binder used, and the type of reinforcing whiskers used, the layer of reinforcing whiskers may be quickly and easily yet accurately applied.

The present invention will now be shown and described with reference to two preferred embdoiments thereof, and with reference to the illustrative drawings.

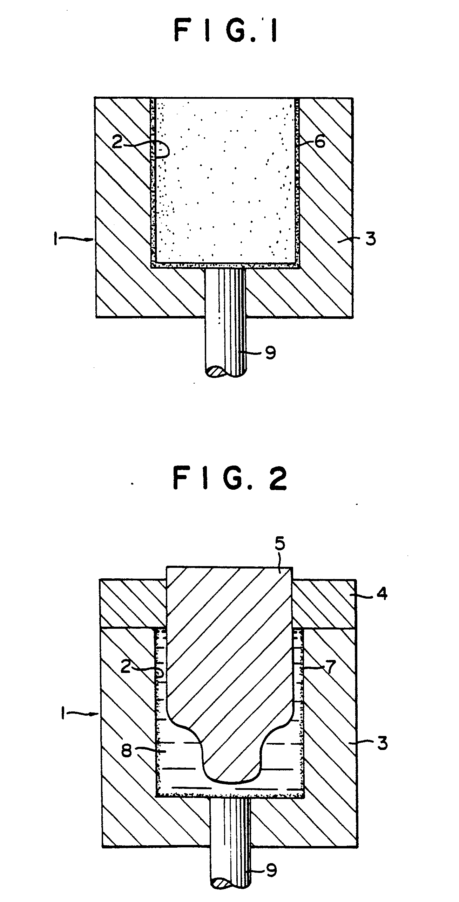

Fig. 1 is a schematic axial longitudinal sectional view through a lower part of an apparatus which is being used in the practice of a first preferred embodiment of the method of manufacturing a surface composite reinforced member according to the present invention, said member being an engine piston, showing the apparatus during the practice of step (b) of said method in which reinforcing whiskers are being applied to the inner side surface of a mold cavity;

Fig. 2 is a schematic axial longitudinal sectional view of both the lower and upper parts of the same apparatus as shown in Fig. 1, showing the apparatus during the practice of step (c) of said first embodiment of this method, in which matrix metal is being pressurized in said mold cavity;

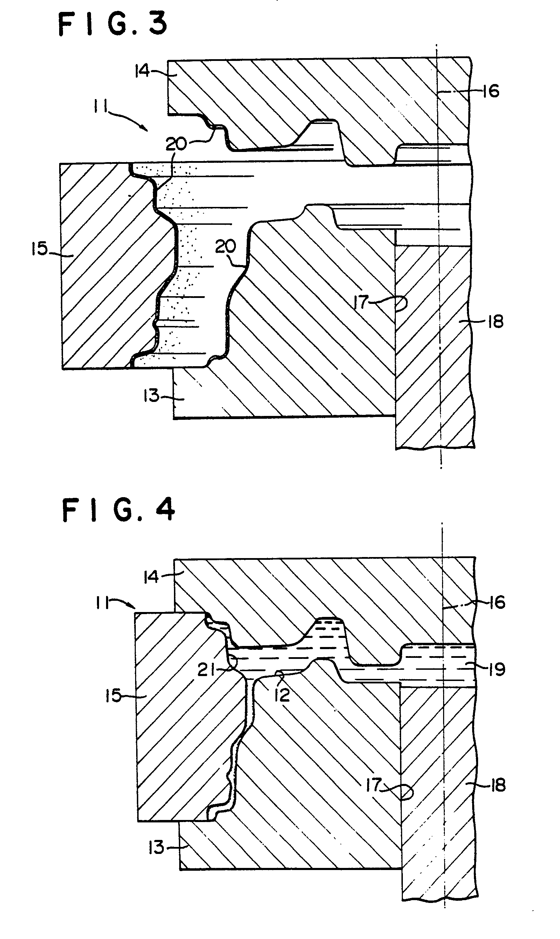

Fig. 3 is a schematic axial longitudinal sectional view through part of an apparatus which is being used in the practice of a second preferred embodiment of the method of manufacture a surface composite reinforced member according to the present invention, said member being a vehicle wheel, showing the apparatus during the practice step (b) of said method in which reinforcing whiskers are being applied to selected side surfaces of certain mold members of said apparatus which are currently separated; and

Fig. 4 is a schematic axial longitudinal sectional view of the same apparatus as shown in Fig. 3, showing the apparatus during the practice of step (e) of said second embodiment of this method, in which matrix metal is being pressurized in a mold cavity defined by the cooperation of said mould members when they are brought together.

The first preferred embodiment

Fig. 1 shows in approximate axial longitudinal section the lower part of an apparatus 1 which is a casting device, and which was being used in the practice of step (b) of a first preferred embodiment of the method of a manufacturing a surface composite reinforced member according to the present invention, in this figure, the reference numeral 2 denotes a substantially cylindrical mold cavity formed in a lower mold member 3 of the casting device 1. This mold cavity 2 was of an appropriate shape to define the outer surface of an engine piston which was to be manufactured. In fact, the diameter of the mold cavity 2 was 90 mm, and the depth thereof was 100 mm, in order to form a piston of substantially these dimensions for a four cylinder four stroke diesel engine of 2200 cc cylinder capacity, the crown, wall, and skirt surface portions of which were desired to be reinforced with whiskers so as to be composed of composite material.

First, as step (a) in the first preferred embodiment, a mass of silicon carbide whiskers which were of fiber diameters 0.2 to 0.5 µm and fiber lengths 20 to 50 µm were added to an aqueous solution of 15% of colloidal silica, which was used as a binder. The volumetric concentration of the silicon carbide whiskers was about 30%. The liquid mixture was stirred until substantially homogenous, and then using a paintbrush a layer 6 of the mixture was painted in step (b) on the inside wall surfaces and the bottom surface of the mold cavity 2 of the lower mold 3, this mixture layer 6 having a thickness of approximately 1.2 mm. At this time, the lower mold 3 was kept heated to a temperature of about 120 to 150°C. Then the liquid mixture was dried [step (c)] so as to leave a layer 7 (see Fig. 2) of silicon carbide whiskers covered with and mixed with dried binder of colloidal silica (which of course solidified) stuck to the wall and bottom surfaces of the mold cavity 2.

Next, as step (d), as shown in Fig. 2, a mass 8 of molten aluminium alloy, of JIS standard AC8A, at 740°C, was poured into the mold cavity 2 of the lower mold 3, and then as shown in Fig. 2, in step (e) an upper mold member 4 was pressed against the top surface of the lower mold 3, and an inner mold or male mold punch or former 5 was inserted downwards through a central hole in this upper mold member 4 and was pressed downwards into the mold cavity 2 by a pressure maintaining means such as a ram device not shown in the Figure, so as to pressurize the molten aluminium alloy mass 8 in said mold cavity 2 to a pressure of approximately 14.7 kN/cm². The outer surface of the male mold punch 5 was so shaped as to properly define the desired inner surface shape of the piston which was desired to be manufactured, and the proper amount of molten aluminium alloy 8 in the mold cavity 2 was used for the male mold punch 5 to enter into the mold cavity 2 for the correct distance to properly shape the piston. This pressure was maintained for approximately 120 seconds, until the molten aluminium alloy mass 8 had entirely solidified, and then the upper mold 4 and the male mold punch 5 were raised, and the formed piston preform was pushed out in the upwards direction from the mold cavity 2 by means of a knock out pin 9 which was provided as extending through the bottom of the lower mold 3.

Thus the crown and the side wall and the skirt surface portions of the resulting piston preform were formed of a reinforced material, produced by the molten aluminium alloy percolating between the interstices of the layer 7 of silicon carbide whiskers under pressure, and thus composed of silicon carbide whiskers disposed within a matrix of aluminium alloy. These portions were sectioned and observed under an electron microscope. It was observed that the silicon carbide whiskers lay in substantially random alignment in two dimensions, extending generally parallel to the continuous surface, and the volumetric proportion of these reinforcing silicon carbide whiskers was approximately 12%. Further, from these reinforced portions of the piston preform test samples were cut, and the elasticity, thermal conductivity, thermal coefficient of expansion, and tensile strength of these test samples were measured, as a result of which it was found that the thermal conductivity and the thermal coefficient of expansion of these test samples were reduced as compared with those of test samples made of pure aluminium alloy of the same kind as the matrix metal, while the elasticity and the tensile strength of these test samples were increased, again as compared with those of said test samples made of pure aluminium alloy of the same kind as the matrix metal. Thus, it will be seen that according to this first preferred embodiment of the method of manufacturing a surface composite reinforced member according to the present invention it is possible to manufacture an engine piston which has good thermal properties such as high thermal insulating capability and low thermal expansion characteristic, as well as having good resistance to wear, high resistance to heat, high strength, and good elasticity, due to the surface reinforcement of the crown, wall and skirt portions thereof.

According to this method of manufacturing an engine piston as described above, a composite reinforced material mass was located in just the part or parts of the cast piston preform member where it is required without any need for forming the silicon carbide whiskers into a preformed shape before casting. This is practicable, even when the portions of the piston preform member which are to be composite reinforced are quite thin and extensive surface portions, such as surface portions very close to its crown and side wall and skirt portions. Further, no risk is run of the silicon carbide whisker reinforcing mass becoming displaced from its desired position during casting. Further, there is no requirement for maintaining any formed shape of the silicon carbide whisker mass in a predetermined position in the mold cavity of the mold 3 during casting, because these whiskers are merely attached to the side surfaces 2 of the casting mold 3. The silicon carbide whiskers are positively and easily kept in their appropriate place during the casting process, without any difficult precasting procedure. Thus, as a whole, the process of manufacturing the surface composite reinforced piston preform member is accomplished cheaply and efficiently, without the use of any vacuum equipment or the like, and because the high pressure casting method is used it is possible to thus form a surface composite reinforced piston preform member in any arbitrary shape. Further, the layer 7 of silicon carbide whiskers is very well and strongly stuck onto said inner surface of the cavity of the mold 3, by adding the colloidal silica binder to the mixture of the silicon carbide whiskers and the water, before applying the layer of silicon carbide whiskers to the side surfaces of the casting mold cavity. Thus, when the layer of silicon carbide whisker reinforcing material is dried, the colloidal silica binder, which is solidified by this drying, helps with the adhesion of said reinforcing silicon carbide whisker layer.

The second preferred embodiment

Figs. 3 and 4 broadly show, in a similar fashion in Figs. 1 and 2 respectively, the practice of a second preferred embodiment of the method of manufacturing a surface composite reinforced member according to the present invention. In Fig. 3 there is shown a part of an axial longitudinal section of an apparatus 11 which is a casting device, and which was being used in the practice of step (b) of this second preferred embodiment. In fact, this figure shows only the left hand part of the longitudinal section of the casting device, which is rotationally symmetrical about an axis 16. This casting device 11 comprises: a lower mold member 13 through the center of which there is provided a pressurizing punch 18, which also serves as a knock out pin as will be seen shortly; an upper mold member 14 which can be brought vertically downwards towards said lower mold member 13 or vertically upwards away therefrom, as desired; and a plurality of side mold members 15, only one of which can be seen in the figure and which are provided in plurality all around the upper and lower mold members 13 and 14, each of which can be brought horizontally towards the axis 16 or away therefrom, as desired. In Fig. 3, the upper mold member 14 is shown as raised away from the lower mold member 13, and the side mold member 15 is shown as brought away from the axis 16 and away from the lower and upper mold members 13 and 14, so as to open the casting mold 11 up. On the other hand, in Fig. 4, the upper mold member 14 is shown as lowered down towards the lower mold member 13, and the side mold member 15 is shown as approached towards the axis 16 and towards the lower and upper mold members 13 and 14 as are also in fact all the other side mold members which cannot be seen in the figure, so as to close up the casting mold 11; and in this position the upper and lower mold members 13 and 14 and the plurality of side mold members 15 defined a mold cavity 12 of an appropriate shape to define the outer surface of a vehicle wheel which was to be manufactured certain surface rim portions of which were desired to be reinforced with whiskers so as to be composed of composite material.

First, as step (a) in the second preferred embodiment, a mass of silicon nitride whiskers which were of average fiber diameter 1.3 μm and average fiber length 180 μm were added to an aqueous solution of 10% of colloidal alumina, which was used as a binder. The volumetric concentration of the silicon nitride whiskers was about 25%. The liquid mixture was stirred until substantially homogeneous, and then using a paintbrush a layer 20 of the mixture was painted in step (b) on the inside surfaces of the side mold portions 15 and the outer or wheel rim defining portions of the lower and upper mold portions 13 and 14, this mixture layer 20 having a thickness of approximately 2.0 mm. At this time, the mold portions 13, 14 and 15 were kept heated to a temperature of about 120°C. Then this liquid mixture was dried [step (c)] so as to leave a layer 21 (see Fig. 4) of silicon nitride whiskers covered with and mixed with dried binder of colloidal alumina stuck to the various wall surfaces of the mold portions 13, 14 and 15.

Next, as step (d), the casting device 11 was partially closed up by the plurality of side mold portions 15 being all moved horizontally so as to be approached towards the central axis 16 of the apparatus, so that as shown in Fig. 4 by the cooperation of all these members a mold cavity 12 circularly symmetrical around the axis 16 of the shape of the vehicle wheel which was desired to be formed was defined, with the above mentioned layer 21 of silicon nitride whiskers all around the portion of said mold cavity 12 which defined the rim portion of said vehicle wheel. Then a mass 19 of molten aluminium alloy, of JIS standard AC4C, at 730°C, was poured through the gap between the upper mold member 14 (which was still in the raised position) and the side mold members 15 into the thus defined mold cavity 21, and then the casting mold device 11 was fully closed up by the upper mold portion 14 being lowered downwards towards the lower mold portion 13 and the side mold portions 15. Then, in step (e), the pressurizing punch 18 was pushed upwards through the central hole 17 in the lower mold member 13 by a pressure maintaining means such as a ram device not shown in the figure, so as to pressurize the molten aluminium alloy mass 19 in said mold cavity 12 to a pressure of approximatley 11.8 $kN/cm^2$. The proper amount of molten aluminium alloy 19 in the mold cavity 12 was used for the mold punch 18 to enter into the hole 17 for the correct distance to properly shape the central portion of the wheel. This pressure was maintained for approximately 60 seconds, until the molten aluminium alloy mass 19 had entirely solidified, and then the upper mold portion 14 was raised and the side mold portions 15 were brought horizontally away from the lower mold portion 13, and the formed wheel was pushed out in the upwards direction from the lower mold 13 by means of the punch 18 being raised through the hole 17.

Thus the rim portions of the resulting vehicle wheel were formed of a reinforced material, produced by the molten aluminium alloy percolating between the interstices of the layer 20 of silicon nitride whiskers under pressure, and thus composed of silicon nitride whiskers disposed within a matrix of aluminium alloy. These portions were sectioned and observed under an electron microscope. It was observed that the silicon nitride whiskers lay in a layer inwards from the surface of the wheel rim approximately 1.5 mm thick in substantially random alignment in two dimensions extending generally parallel to the contiguous surface, and by measuring the specific gravity of a sample portion of this layer it was determined that the volume proportion of these reinforcing silicon nitride whiskers was approximately 12%. Thus, it will be seen that according to this second preferred embodiment of the method of manufacturing a surface composite reinforced member according to the present invention it is possible easily and efficiently to manufacture a vehicle wheel in which the rim portions are reinforced with silicon nitride whiskers, and which thus has good resistance to wear, high resistance to heat, high strength, and good elasticity, while still being thin and light, due to the surface reinforcement of said rim portions thereof; and this is done without any requirement for a surface treatment such as the application of a coating to the surface of these wheel rim portions.

Although in the shown two preferred embodiments the application of the mixture including the reinforcing material to the inside surfaces of the mold cavity was performed by using a brush, in an alternative embodiment spraying or the like could also be used.

### Claim

A method of manufacturing a surface composite reinforced member, comprising the steps of

a) preparing a mixture of reinforcing whiskers and a solvent,

b) applying the mixture in form of a thin layer (6) to an inner surface of a mold cavity (2) in a casting mold (3),

c) drying the layer by volatilizing said solvent out of the layer (6),

d) introducing a mass of molten metal into said mold cavity (2), and

e) applying pressure to said mass of molten metal until the mass of molten metal is solidified, characterized in that said mixture further contains a binder selected from the group consisting of colloidal alumina, colloidal silica and waterglass.

### Patentanspruch

Verfahren zur Herstellung eines an der Oberfläche durch einen Verbundwerkstoff verstärkten Teils mit den Schritten

a) das Herstellens einer Mischung aus verstärkenden Whiskern und einem Lösungsmittel,

b) des Aufbringens der Mischung in Form einer dünnen Schicht (6) auf eine innere Oberfläche einer Formhöhlung (2) in einer Gießform (3),

c) des Trocknens der Schicht durch Verdampfen das erwähnten Lösungsmittels aus der Schicht (6),

d) des Einführens einer Masse aus geschmolzenem Metall in die erwähnte Formhöhlung (2) und

e) des Ausübens von Druck auf die erwähnte Masse aus geschmolzenem Metall, bis die Masse aus geschmolzenem Metall erstarrt ist,

dadurch gekennzeichnet, daß die erwännte Mischung ferner ein Bindemittel enthält, das aus der aus kolloidalem Aluminium-oxid, kolloidalem Siliciumdioxid und Wasserglas bestehenden Gruppe ausgewählt ist.

### Revendication

Un procédé de fabrication d'une pièce à surface renforcée par un matériau composite comprenant les étapes suivantes:

a) on prépare un mélange de monocristaux de renforcement et d'un solvant;

b) on applique le mélange sous la forme d'une couche mince (6) à la surface intérieure de la cavité d'un moule (2) dans un moule de coulée (3);

c) on sèche la couche en éliminant ce solvant de la couche (6) par volatilisation;

d) on introduit une masse de métal fondu dans cette cavité (2) du moule; et

e) on applique une pression à cette masse de métal fondu jusqu'à ce qu'elle se solidifie,

caractérisé en ce que ce mélange contient en outre un liant choisi dans le groupe constitué par de l'alumine colloïdale, de la silice colloïdale et du silicate de soude.

# F I G. 1

# F I G. 2

# F I G. 3

# F I G. 4